# EUROPÄISCHE PATENTSCHRIFT

(11) **EP 2 083 522 B1**
(45) Veröffentlichungstag und Bekanntmachung des Hinweises auf die Patenterteilung: **05.01.2011**
(21) Anmeldenummer: 09000265.0
(22) Anmeldetag: 10.01.2009
(51) Int. Cl.: H04B 10/148, H04B 10/158, H04B 10/10

(54) **Verfahren zur atmosphärischen optischen Freiraumübertragung von digitalen Signalen und Empfänger für das Verfahren**
Method for atmospheric optical free space transfer of digital signals and recipients for the method
Procédé destiné à la transmission d'espace vide optique atmosphérique de signaux numériques et récepteurs pour le procédé

(30) Priorität: 23.01.2008 DE 102008005791
(43) Veröffentlichungstag der Anmeldung: 29.07.2009
(73) Patentinhaber: Deutsches Zentrum für Luft- und Raumfahrt e.V., 51147 Köln (DE)
(72) Erfinder: Perlot, Nicolas, Dr., 82205 Gilching (DE); Giggenbach, Dirk, Dr., 86932 Pürgen (DE); Henniger, Hennes, 82211 Herrsching (DE)
(74) Vertreter: von Kreisler Selting Werner

(56) Entgegenhaltungen:
- DE-A1-102006 030 915
- US-A1- 2003 198 478
- LEONID G KAZOVSKY ET AL: "Homodyne Phase-Shift-Keying Systems: Past Challenges and Future Opportunities" JOURNAL OF LIGHTWAVE TECHNOLOGY, IEEE SERVICE CENTER, NEW YORK, NY, US, Bd. 24, Nr. 12, 1. Dezember 2006 (2006-12-01), Seiten 4876-4884, XP011155998 ISSN: 0733-8724

## Beschreibung

Die Erfindung betrifft ein Verfahren zur atmosphärischen optischen Freiraumübertragung von digitalen Signalen unter Verwendung von Differential-Phase-Shift-Keying (DPSK), wobei sendeseitig ein Laserstrahl mittels eines differentiell codierten Modulationssignals moduliert und empfangsseitig in einem Demodulator das interferometrische Self-Homodyne-Prinzip angewandt wird, bei dem der empfangene Laserstrahl in zwei Teilstrahlen aufgespalten wird, von denen der eine Teilstrahl um eine Bitdauer verzögert und mit dem anderen, unverzogerten Teilstrahl zu einem Überlagerungsstrahl überlagert wird, der danach einer Detektion zugeführt wird, die sich im Ergebnis im Wesentlichen wie eine inkohärent ausgeführte Direktdetektion verhält.

Die Erfindung betrifft auch einen Empfänger zur Verwendung bei einem Verfahren zur atmosphärischen optischen Freiraumubertragung von digitalen Signalen.

Wenn sich eine Laserstrahlwelle durch die turbulente Atmosphare ausbreitet, verliert sie ihre räumliche Kohärenz und schwankt zufällig in der Phase und Amplitude. Diese zufälligen Schwankungen beeinflussen verschiedene Arten von Empfängern unterschiedlich.

Bei den dem Stand der Technik entsprechenden atmosphärischen optischen Freiraum-Kommunikationsverfahren sind die Empfangsverfahren in zwei Kategorien unterteilt, nämlich das inkohärente und das kohärente Empfangsverfahren. Das inkohärente Empfangsverfahren wird auch als Empfangsverfahren mit Direktdetektion bezeichnet.

Beim inkohärenten Empfangsverfahren wird eine direkte Detektion ausgeführt, d.h. die Wellenenergie wird direkt detektiert. Diese Art von Detektion erlaubt Modulationen wie z.B. On-Off-Keying (OOK), d.h. eine Trägerumtastung, bei der der Träger ein- und ausgeschaltet wird, oder die Pulslagenmodulation (PPM; Pulse Position Modulation).

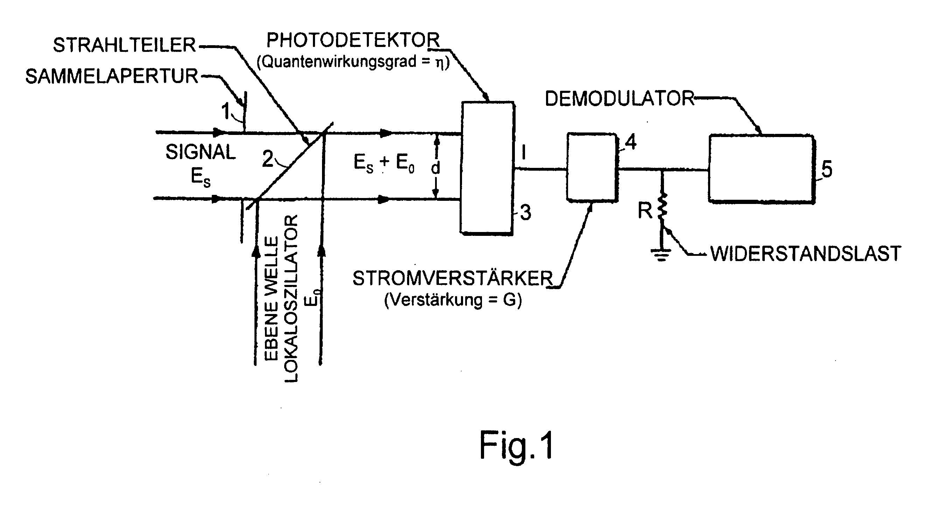

Beim kohärenten Empfangsverfahren weist der Empfänger einen zweiten Laser auf, der als "Lokaloszillator" bezeichnet wird und dessen erzeugte Welle vor der Detektion mit der empfangenen Welle überlagert wird. Dies ermöglicht das Detektieren von Phasen-, Frequenz- oder Amplitudenverschiebungen der Welle und somit das Decodieren der zugrundeliegenden Bitinformation. Fig.1 zeigt den Aufbau eines optischen Heterodyn-Empfängers, wie er z.B. aus dem Artikel von K. A. Winick: "Atmospheric turbulence-induced signal fades on optical heterodyne communication links", Appl. Opt. 25, Seiten 1817-1825, (1986), bekannt ist.

Entsprechend der Darstellung in Fig.1 fällt eine Empfangssignalwelle E_{S} im Empfänger über eine Sammelapertur 1 ein und trifft auf einen Strahlteiler 2, der senkrecht zur Empfangssignalwelle E_{S} noch von einer ebenen Welle E₀ eines Lokaloszillators bestrahlt wird. Die beiden Wellen E_{S} und E₀ überlagern sich zu einer Überlagerungswelle E_{S} + E₀, die zu einem Photodetektor 3 mit einem Durchmesser d gelangt. Der detektierte Ausgangsstrom I des Photodetektors 3 wird zu einem Stromverstärker 4 mit einer Verstärkung G geleitet und gelangt schließlich an einen Demodulator 5, wobei als Querglied davor noch eine Widerstandslast R vorgesehen ist.

Die Vorteile des kohärenten Empfangsverfahrens mit Lokaloszillator im Vergleich zu einem Empfangsverfahren mit direkter Detektion bestehen im Hinblick auf die atmosphärischen Bedingungen darin, dass beim kohärenten Empfangsverfahren eine höhere Geschütztheit gegen Hintergrundlicht erreicht wird und ein kohärenter Empfänger auf die einfallende Welle empfindlicher als ein Empfänger mit direkter Detektion ist. Ein gut gestalteter kohärenter Empfänger weist ein vernachlässigbares thermisches Rauschen auf.

Der Nachteil des kohärenten Empfangsverfahrens ist jedoch darin zu sehen, dass ein kohärenter Empfänger an einem schlechten Überlagerungswirkungsgrad leidet, wenn die einfallende Wellenfront verzerrt ist. Da es bei einem Empfänger mit direkter Detektion keine Überlagerung optischer Wellen gibt, gibt es auch keinen einem Überlagerungswirkungsgrad zugeordneten Verlust.

Das Hauptproblem einer kohärenten Detektion ist daher die durch atmosphärische Ausbreitung herbeigeführte Wellenfront-verzerrung. Wenn eine verzerrte Wellenfront empfangen wird, passt diese nicht mit der ebenen Front einer Lokaloszillatorwelle zusammen. Die beiden Wellen mischen sich schlecht und der Überlagerungswirkungsgrad ist kleiner als eins. Im Artikel von D. L. Fried: "Optical heterodyne detection of an atmospherically distorted signal wave front", Proc. IEEE 55, Seiten 57-66, 1967, ist aufgezeigt, dass eine Verschlechterung des Überlagerungswirkungsgrads einem Verlust in Bezug auf das Signal/Rausch-Verhältnis (SNR) entspricht.

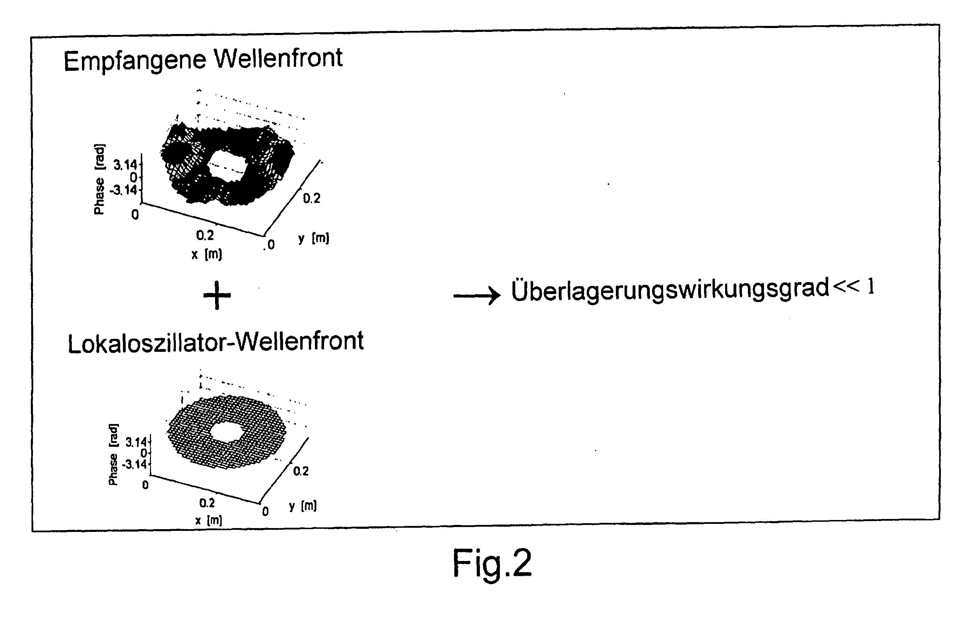

Fig.2 stellt die Überlagerung einer durch die Atmosphäre verzerrten empfangenen Welle und einer Lokaloszillatorwelle in einem herkömmlichen kohärenten Empfänger dar. Die Schwundtiefe ist durch den Überlagerungswirkungsgrad gegeben. Wegen der unangepassten Wellenfronten ist der Überlagerungswirkungsgrad viel kleiner als 1.

Die Wellenfrontverzerrungen sind im Allgemeinen durch den Fried-Parameter *r*₀, der auch als atmosphärischer Kohärenzdurchmesser bezeichnet wird, vorteilhaft gekennzeichnet. Je kleiner der Parameter *r*₀ ist, desto größer sind die Wellenfrontverzerrungen. Ist *D* der Durchmesser des Empfangsteleskops, dann gilt als Faustregel, dass
- wenn *r*₀>*D*, dann ist der Überlagerungswirkungsgrad nahe seinem Maximum (d.h. nahe bei 1),
- wenn *r*₀<*D*, dann ist der Überlagerungswirkungsgrad kleiner als 1. Für *r*₀<*D*/3 kann der Überlagerungswirkungsgrad leicht 0,01 erreichen.

Der Parameter *r*₀ variiert über viele Einflussgrößen. Die relevantesten Einflussgrößen davon sind der Verbindungsabstand, die Tageszeit (Sonnenerwärmung), die Höhe über dem Boden, die Art der Bodenoberfläche unter dem Strahlpfad und der Elevationswinkel über dem Horizont.

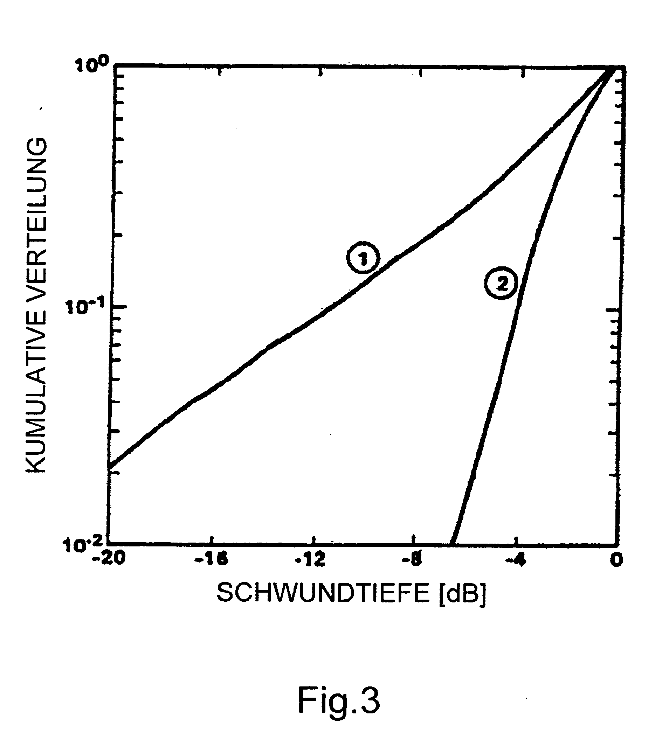

Fig.3 zeigt ein Beispiel von kumulativen Verteilungen der Schwundtiefe eines Überlagerungssignals. Der Schwund wird dabei jeweils durch Wellenfrontverzerrungen hervorgerufen. Die Kurve ① und die Kurve ② stellen verschiedene *D*/*r*₀-Verhältnisse dar.

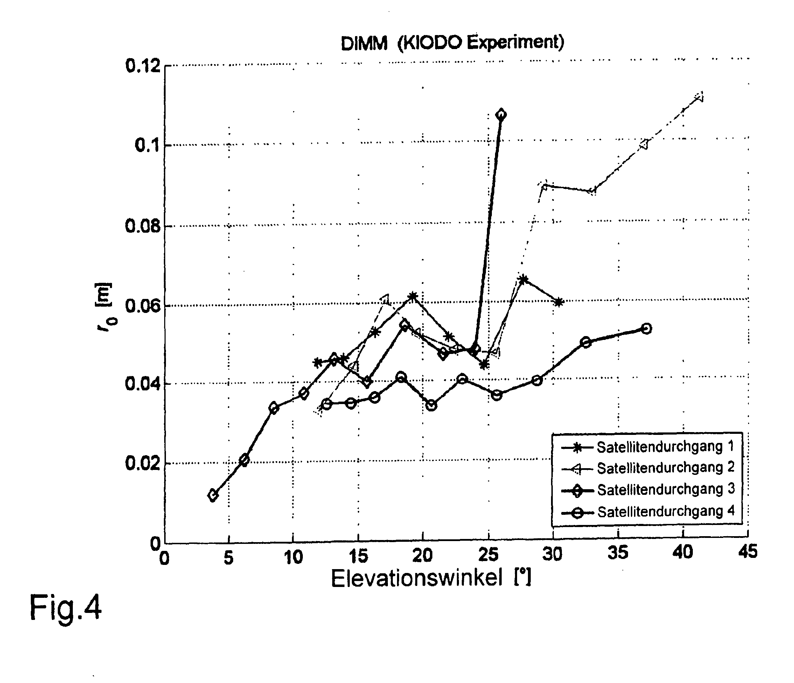

Fig.4 zeigt Variationen des Parameters *r*₀ [m] als eine Funktion des Elevationswinkels [°] für eine Satelliten-Downlink-Verbindung. Die in Fig.4 gezeichneten experimentellen *r*₀-Werte wurden mit einem DIMM(Differential Image Motion Monitor)-Instrument für eine Wellenlänge von 1064 nm und für moderate atmosphärische Turbulenzen während einer optischen Downlink-Verbindung von einem Satelliten zum Boden gemessen. Alle Werte sind etwa zur gleichen Tageszeit gemessen worden. Es zeigt sich, dass der Wert von *r*₀ bei 3° Elevation 20-mal kleiner sein kann als derjenige bei 30° Elevation. Eine sogar noch höhere Variation ist zwischen 0° und 90° Elevation zu erwarten.

Hauptsächlich von Astronomen wurden im Verlaufe der letzten Jahrzehnte adaptive Optiken entwickelt, um Wellenfrontverzerrungen zu korrigieren. Adaptive Optiken beruhen gewöhnlich auf verformbaren Spiegeln, welche die vorher gemessenen Wellenfrontverzerrungen kompensieren. Adaptive Optiken können den Überlagerungswirkungsgrad korrigieren und ihn nahezu auf 1 bringen. Adaptive Optiken haben allerdings schwerwiegende Einschränkungen. Sie sind teuer, komplex, für einen begrenzten Bereich von *r*₀ gestaltet und gewöhnlich zu langsam im Vergleich zur atmosphärischen Bandbreite.

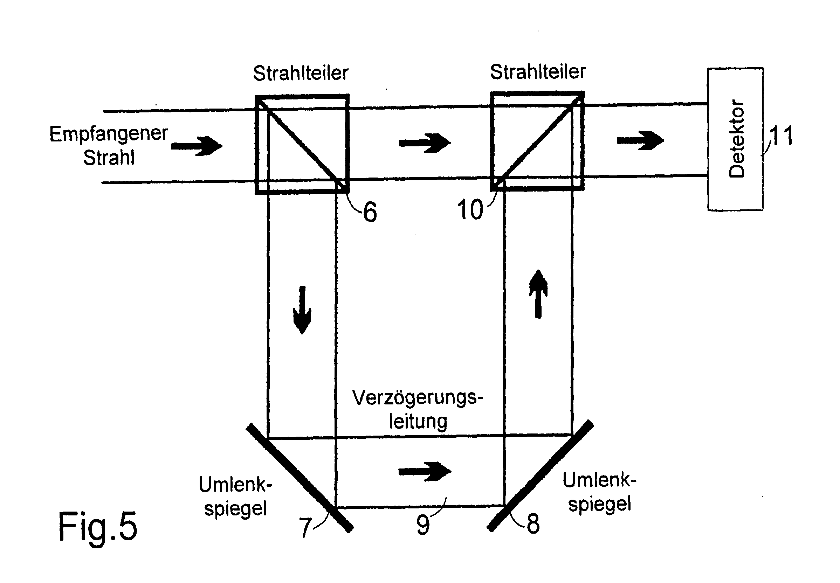

Aus dem Artikel von K. Kiasaleh, "Performance of coherent DPSK free-space optical communication systems in K-distributed turbulence", IEEE Transactions on Communications 54, Issue 4, Seiten 604-607, 2006, ist es bekannt, dass ein optischer DPSK-Empfänger die Phase detektieren kann, wobei er sich in mancherlei Hinsicht wie ein Empfänger mit Direktdetektion verhält. DPSK (Differential Phase-shift Keying) wird auch als Self-Homodyne-Empfang bezeichnet, weil die einfallende Welle nicht mit einer Lokaloszillatorwelle gemischt wird, sondern mit der einfallenden Welle selbst. Zur optischen Überlagerung eines Symbols mit dem vorhergehenden kann ein Interferometer verwendet werden, wie es in Fig.5 gezeigt ist.

In Fig.5 ist schematisch das Prinzip eines DPSK-Empfängers mit Direktdetektion dargestellt. Der. empfangene Lichtstrahl wird in einem Strahlteiler 6 in zwei Strahlen aufgeteilt. In den einen der beiden Strahlverläufe ist mittels zweier Umlenkspiegel 7 und 8 und einer Verzögerungsleitung 9 eine Verzögerung von einer Bitdauer eingefügt. Die beiden Strahlen werden dann mittels eines Strahlteilers 10 vereinigt und zu einem Überlagerungsstrahl überlagert. Der Überlagerungsstrahl wird dann einer Detektion in einem nachfolgenden Detektor 11 zugeführt.

Die Verwendung eines DPSK-Empfängers macht nur darum Sinn, weil die zwei Wellen zweier aufeinanderfolgender Symbole die gleichen Verzerrungen in Phase und Amplitude haben. Dies wurde in dem vorher erwähnten Artikel von Kiasaleh dargelegt.

Danach kann bei Betrachtung von Kommunikationssystemen, die mit mehreren hundert Megabit-pro-Sekunde (Mb/s) bis wenig Gigabit-pro-Sekunde (Gb/s) arbeiten, ein Modell mit "eingefrorener Atmosphäre" angenommen werden, bei dem die Kanaleigenschaften für wenigstens zwei aufeinanderfolgende Bit-Intervalle konstant bleiben. Diese Bedingung gilt streng für ein Kommunikationssystem mit differentiell codiertem Phase-Shift-Keying (DPSK), das eine konstante Kanalbedingung über wenigstens zwei aufeinanderfolgende Bit-Intervalle verlangt, um richtig zu arbeiten.

Es ist auch festzustellen, dass ungeachtet der Schwere der Turbulenzen, die einen schwerwiegenden Einfluss auf die Amplitude und Phase des Signals über die Zeit haben, die Annahme einer eingefrorenen Atmosphäre (die sich auf die Querwindgeschwindigkeit bezieht) die Variation der Phase des Signals auf ein tolerierbares Niveau über zwei aufeinander folgende Bit-Intervalle einschränken würde (was von einigen hundert Pikosekunden bis zu wenigen Nanosekunden reicht). Dabei ist anzumerken, dass die Variation in der Phase und nicht die absolute Phase hier von Bedeutung ist. Unter solchen Umständen kann daher der Einfluss von Phasenschwankungen auf die Systemleistungsfähigkeit ignoriert werden.

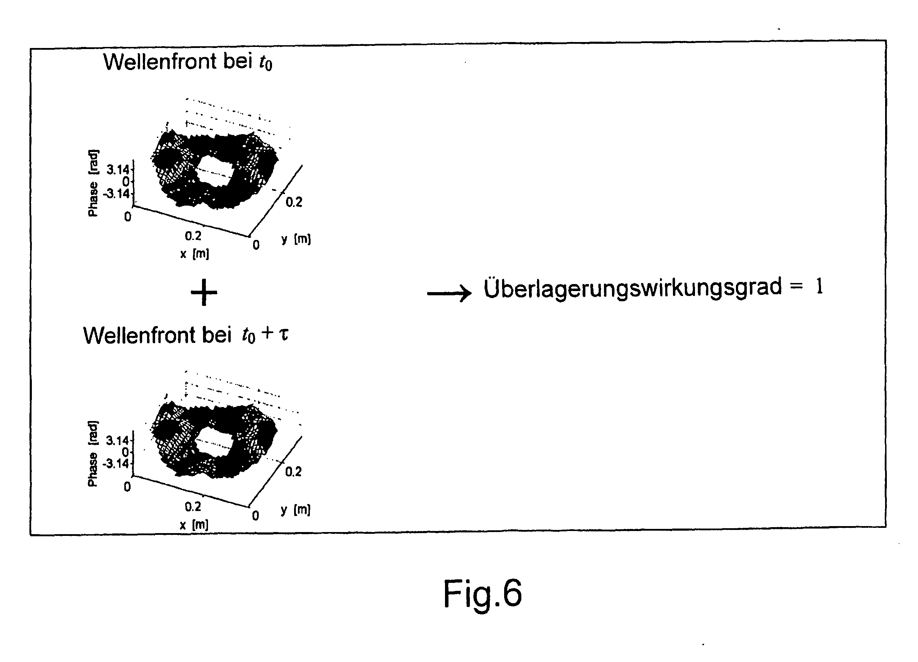

Da beim DPSK-Empfänger die beiden überlagerten Wellen die gleichen Frontverzerrungen haben, passen sie perfekt zusammen und der Überlagerungswirkungsgrad ist eins. Fig.6 stellt schematisch die Überlagerung der zwei überlagerten Wellen in einem DPSK-Empfänger dar. Dabei ist die eine Wellenfront zu einem Zeitpunkt *t*₀ und die andere Wellenfront zu einem Zeitpunkt *t*₀ + τ angekommen. Als Ergebnis der Eigenüberlagerung ist das Signal proportional zur empfangenen optischen Leistung, wie bei einem Empfänger mit Direktdetektion.

Aus DE 2006 030 915 A1 ist ein insbesondere für höherwertige QAM mit beliebig vielen Phasenzuständen geeigneter optischer Empfänger bekannt, der in seiner elektrischen Auswertungseinheit neben einem Symbolentscheider noch einen Normalisierer oder einen der Phasenwinkelbestimmung dienenden ARG-Operator aufweist. Die Art der Symbolentscheidung hängt davon ab, ob der Amplitudendetektionspfad nur mit dem Normalisierer bzw. ARG-Operator oder nur mit dem Symbolentscheider oder mit beiden verbunden ist. Diese Anordnung kann sowohl in Direktempfängern, mit welchen dann ein Empfang von QAM-Signalen mit beliebig vielen Phasenzuständen möglich ist, als auch in kohärenten, mit Lokaloszillator betriebenen Homodyn-Überlagerungsempfängern vorgesehen werden.

In US 2006/0245766 A1 ist ein Verfahren zum Ausführen einer Schätzung der Phase eines empfangenen Signals in Bezug auf die Schwingung des Lokaloszillators in einem kohärenten optischen Detektionssystem eines optischen Empfängers beschrieben.

In WO 01/06663 A2 ist ein Verfahren zur Schwundverminderung bei optischen Freiraum-Übertragungssystemen behandelt. Dabei wird eine besondere verzögerte Diverstitätslösung angewandt. Die zu übertragenden Daten werden in einem Satz von Lichtsignalen ausgesendet, die jeweils eine unterschiedliche Polarisation und/oder verschiedene Wellenlängen aufweisen. Die verschiedenen Lichtsignale sind auch zeitlich verschieden, da sie untereinander verzögert ausgesendet werden. Jedes Lichtsignal wird somit über einen verschiedenen unkorrelierten Kanal durch die Atmosphäre übertragen. Im Empfänger werden dann die ursprünglichen Daten in jedem Lichtsignal zeitlich angeglichen und zu einem einzigen Datensignal kombiniert.

Ein weiteres Übertragungsverfahren nach dem Stand der Technik ist aus der US-A-2003/0198478 bekannt.

Bei den bisher bekannten Lösungen zum Erzielen atmosphärischer optischer Kommunikationsverbindungen besteht somit der Nachteil, dass eine Modulation und eine Empfängerart gewählt werden müssen, die am Besten mit den atmosphärischen Schwankungen umgehen.

Wird ein kohärentes Empfangsverfahren gewählt, so muss dabei das Problem von Wellenfrontverzerrungen gelöst werden, indem entweder der Teleskopdurchmesser *D* kleiner als der Parameter *r*₀ gehalten wird oder auf adaptive Optiken zurückgegriffen werden, die teuer, komplex, für einen begrenzten Bereich des Parameters *r*₀ gestaltet und gewöhnlich zu langsam im Vergleich zur atmosphärischen Bandbreite sind.

Gewöhnlich wird deswegen eine Intensitätsmodulation mit Direktdetektion wegen deren Unempfindlichkeit gegenüber Phasenschwankungen gewählt. In diesem Fall wird allerdings auf die Vorteile eines kohärenten Empfangsverfahrens verzichtet.

Der Erfindung liegt die Aufgabe zu Grunde, die Übertragung eines optischen Signals durch die Atmosphäre im Vergleich zu den bisher bekannt gewordenen Übertragungsverfahren im Freiraum zu verbessern. Es soll darüber hinaus auch ein Empfängeraufbau geschaffen werden, der sich bei dem verbesserten optischen Freiraumübertragungsverfahren vorteilhaft einsetzen lässt.

Gemäß der Erfindung, die sich auf ein Verfahren der eingangs genannten Art bezieht, wird diese Aufgabe dadurch gelöst, dass empfangsseitig zusätzlich in einem kohärenten, mit einem Laser-Lokaloszillator betriebenen Phasendemodulator mit nachfolgender, elektrisch betriebener Bit-zu-Bit-Differenzschaltung eine zweite Detektion durchgeführt wird und dass die zwei mittels der beiden Demodulatoren detektierten Signale einem signaloptimierenden Auswahl- oder Kombinierverfahren unterzogen werden.

Bei dem Verfahren nach der vorliegenden Erfindung werden die Vorteile sowohl der kohärenten als auch der inkohärenten Technik ausgenutzt.

Zum Ermöglichen der Demodulationsdiversität wird gemäß der vorliegenden Erfindung eine differentielle Bit-Codierung verwendet.

Durch das Verfahren nach der vorliegenden Erfindung wird der Anwendungsbereich der atmosphärischen optischen Kommunikation erweitert.

Gemäß einer vorteilhaften Ausgestaltung des Verfahrens nach der vorliegenden Erfindung besteht die Möglichkeit zum Überwachen eines atmosphärischen Parameters und zum Anpassen der Empfängerkonfiguration entsprechend dem Wert dieses Parameters.

Zu diesem Zweck lassen sich Wellenfrontverzerrungen des empfangsseitig einfallenden optischen Strahls messen oder schätzen. In Abhängigkeit von der gemessenen bzw. geschätzten Wellenfrontverzerrung wird dann auf den einen oder anderen der beiden Demodulatoren mehr optische Leistung auf Kosten des jeweils anderen Demodulators gerichtet, wobei die Regel gilt, dass bei stärkerer Wellenfrontverzerrung mehr optische Leistung auf den gemäß dem Self-Homodyne-Prinzip mit Direktdetektion arbeitenden Demodulator und weniger optische Leistung auf den kohärenten, mit Lokaloszillator arbeitenden Demodulator gerichtet wird und umgekehrt.

Die Wellenfrontverzerrungen des einfallenden optischen Strahls können anhand des sogenannten Fried-Parameters *r*₀ bestimmt werden, der auch als Kohärenzdurchmesser bezeichnet wird, wobei gilt, dass je kleiner der Parameter *r*₀ ist, desto größer die Wellenfrontverzerrungen sind.

In vorteilhafter Weise können die Wellenfrontverzerrung des einfallenden Strahls mittels einer CCD-Kamera bestimmt werden, der ein abgezweigter Teilstrahl des über ein Empfangsteleskop einfallenden Strahls zugeführt wird, wobei mit der CCD-Kamera der Brennfleck des Empfangsteleskops beobachtet und aus der Größe des Brennflecks auf die Frontverzerrung des einfallenden Strahls geschlossen wird und wobei gilt, dass die mittlere Größe des Brennflecks umgekehrt proportional zum *r*₀-Parameter und etwa proportional zur Wellenfrontverzerrung ist.

Die Wellenfrontverzerrung bzw. der *r*₀-Parameter des einfallenden Strahls kann auch mittels des sogenannten DIMM-Prinzips ermittelt werden, das im Artikel von Sarazin, M., Roddier, F.: "The ESO differential image motion monitor", 1990, Astron. Astrophy. 227, Seiten 294-300, beschrieben ist.

Das Ausgangssignal des gemäß dem Self-Homodyne-Prinzip mit Direktdetektion arbeitenden Demodulators und das Ausgangssignal des kohärenten, mit Lokaloszillator arbeitenden Demodulators mit nachgeschalteter Bit-zu-Bit-Differenzschaltung werden zweckmäßig entsprechend einer der herkömmlichen Diversitäts-Kombiniertechniken kombiniert, wie z.B. Selection Combining, Switched Combining, Equal Gain Combining oder Maximum Ratio Combining.

Das signaloptimierende Auswahl- oder Kombinierverfahren kann in einer alternativen Verfahrensform auch durch Analysieren der elektrischen Ausgangssignale der beiden Demodulatoren gesteuert werden. Dabei werden aus den elektrischen Ausgangssignalen Informationen über die Signalqualität durch Verwendung codierter Übertragungen erhalten, bei denen sendeseitig eine kleine Menge redundanter Daten hinzugefügt ist. Mittels CRC(Cyclic Redundancy Check)-Signalen oder Ausgangssignalen von FEC(Forward Error Correction)-Decodierern kann die laufende Übertragungsqualität jedes Empfängers geschätzt werden. Diese Qualitätsschätzung, gegeben z.B. als eine Zählung von Symbolfehlern, kann dann für die Auswahl- und Kombinierentscheidung benutzt werden.

Bei dieser alternativen Verfahrensform ist es zweckmäßig, dass beide Demodulatoren konstant optische Leistung empfangen und keine Verzerrungsmessung am einfallenden optischen Strahl und keine gesteuerte Verteilung der optischen Leistung vorgenommen wird.

Vorteilhafte Weiterbildungen und Ausgestaltungen des Verfahrens nach der angegebenen Erfindung sind in den sich auf den Patentanspruch 1 unmittelbar oder mittelbar rückbeziehenden Unteransprüchen 2 bis 8 angegeben.

Ein Empfänger zur aufgabengemäßen Verwendung bei einem Verfahren nach der vorliegenden Erfindung zeichnet sich dadurch aus, dass ein gemäß dem Self-Homodyne-Prinzip mit Direktdetektion arbeitender DPSK-Demodulator und ein kohärenter, mit Lokaloszillator arbeitender Demodulator mit nachgeschalteter Bit-zu-Bit-Differenzschaltung vorgesehen sind, denen zu gleichen oder steuerbar variablen Leistungsanteilen der über ein Empfangsteleskop empfangene Strahl zugeleitet wird, und dass die Ausgänge der beiden Demodulatoren mit einer steuerbaren elektrischen Auswahl- oder Kombiniereinrichtung verbunden sind.

Zur Bestimmung der Wellenfrontverzerrung des über das Empfangsteleskop empfangenen Strahls ist im Empfänger vorteilhaft eine Mess- oder Schätzvorrichtung vorgesehen, die von der jeweiligen Wellenfrontverzerrung abhängige Steuersignale erzeugt. Die Messvorrichtung kann eine CCD-Kamera sein, aber auch ein DIMM-Instrument.

Im Empfänger kann im Anschluss an des Empfangsteleskop ein optischer Strahlteiler vorgesehen sein, der einen kleinen Anteil des empfangenen Strahls an die Mess- bzw. Schätzvorrichtung und den anderen Anteil unter geeigneter steuerbarer Leistungsaufteilung an die beiden Demodulatoren weitergibt.

Im Wege des Strahls zwischen dem optischen Strahlteiler und den beiden Demodulatoren kann ein von der Mess- bzw. Schätzvorrichtung steuerbarer, variabler Strahlteiler oder ein von der Mess- bzw. Schätzvorrichtung steuerbarer, in zwei Stellungen schwenkbarer Umlenkspiegel vorgesehen sein. Der variable Strahlteiler ist hinsichtlich der Aufteilung der Strahlungsleistung auf seine zwei Strahlausgangszweige, die jeweils zu einem der beiden Demodulatoren führen, variabel.

In einer vereinfachten Variante ist der steuerbare, in zwei Stellungen schwenkbare Umlenkspiegel zur Strahlweiterleitung auf einen der beiden Demodulatoren ausrichtbar. Die elektrischen Signalausgänge der beiden Demodulatoren sind hierbei mit den beiden Eingängen eines elektrischen Umschalters verbunden, der zur Durchführung des "Switched-Combining"-Diversitätsverfahrens dient und von der Mess- bzw. Schätzvorrichtung gemeinsam mit dem steuerbaren, in zwei Stellungen schwenkbaren Umlenkspiegel gesteuert wird. Der Ausgang des steuerbaren Umschalters bildet dann den Signalausgang des Empfängers. Der Lokaloszillator des kohärent arbeitenden Demodulators ist vorteilhaft gemeinsam mit dem elektrischen Umschalter und dem steuerbaren, in zwei Stellungen schwenkbaren Umlenkspiegel von der Mess- bzw. Schätzvorrichtung ein- oder ausschaltbar, je nachdem welcher der beiden Demodulatoren über den steuerbaren Umlenkspiegel gerade betrieben werden soll.

Das Verfahren nach der vorliegenden Erfindung und Ausführungsbeispiele eines Empfängeraufbaus dafür werden im Folgenden anhand von Zeichnungen erläutert. Es zeigen:
- Fig.1: in einer schematischen Ansicht den bekannten und be- reits vorher beschriebenen Aufbau eines optischen Ü- berlagerungsempfängers,
- Fig.2: in einer schematischen Ansicht die bereits erläuterte Überlagerung einer empfangenen, an ihrer Front ver- zerrten Welle und einer Lokaloszillatorwelle in einem herkömmlichen kohärenten Empfänger,
- Fig.3: eine bereits vorher erläuterte graphische Darstellung eines Beispiels von Verteilungen der Schwundtiefe ei- nes Überlagerungssignals, wobei der Schwund jeweils durch Wellenfrontverzerrungen verursacht wird,
- Fig.4: in einer auch bereits vorher beschriebenen graphi- schen Darstellung die Variation des Fried-Parameters *r*₀ [m] über den Elevationswinkel [°] für eine opti- sche Satelliten-Downlink-Freiraumverbindung,
- Fig.5: in einer schematischen Ansicht die Darstellung des bekannten und bereits vorher beschriebenen Prinzips eines DPSK-Empfängers mit Direktdetektion,
- Fig.6: in einer schematischen Ansicht die ebenfalls bereits vorher erläuterte Überlagerung zweier überlagerter, nacheinander empfangener Wellen in einem herkömmli- chen DPSK-Empfänger,
- Fig.7: in einer schematischen Ansicht eines Ausführungsbei- spiels die Darstellung des Prinzips eines optischen Empfängeraufbaus, der gemäß dem Verfahren nach der vorliegenden Erfindung ein DPSK-Signal entsprechend zwei verschiedenen Techniken, nämlich entsprechend der kohärenten Technik und der Direktdetektionstech- nik, demodulieren kann, und
- Fig.8: in einer schematischen Ansicht eine vereinfachte Aus- führungsform des in Fig.7 beschriebenen Prinzipbei- spiels zur Durchführung des Verfahrens nach der vor- liegenden Erfindung, wobei als Diversitätskombinier- maßnahme die sogenannte "Switch-Combining"-Methode angewandt wird.

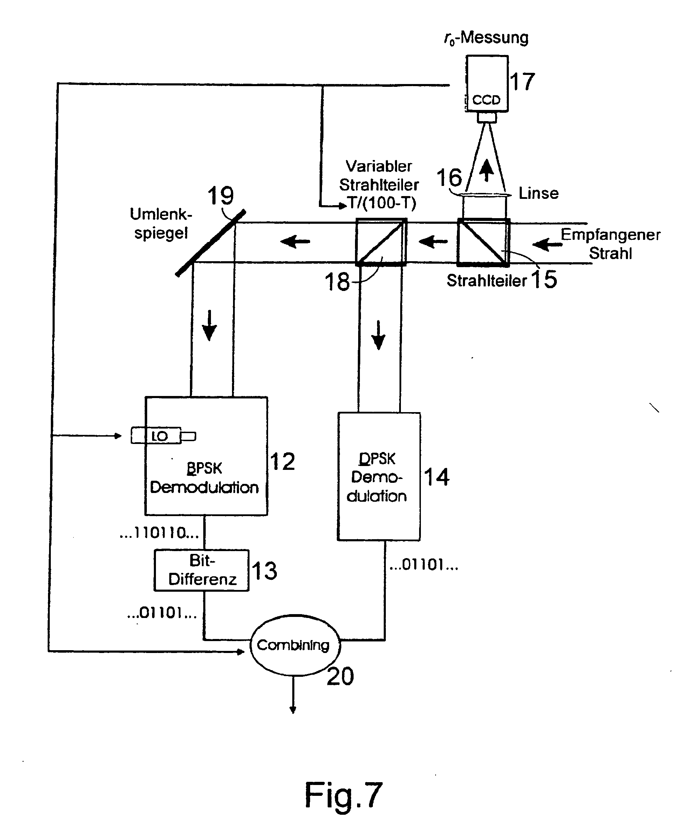

Fig.7 stellt einen durch die Verwendung des Verfahrens nach der vorliegenden Erfindung verbesserten DPSK-Empfänger mit zwei verfügbaren Demodulationsmechanismen und Diversitätskombination dar.

Der erste Demodulationsmechanismus besteht aus einem kohärenten BPSK-Demodulator 12 mit Lokaloszillator LO, dem eine elektrisch betriebene Bit-zu-Bit-Differenzschaltung 13 folgt, die die BPSK-Demodulation zu einer DPSK-Demodulation vervollstandigt.

Der zweite Demodulationsmechanismus besteht aus einem DPSK-Demodulator 14 mit Direktdetektion.

Die beiden verschiedenen Demodulationsmechanismen erzeugen an ihren Ausgängen zwei verschiedene Signale. Da diese beiden Signale die gleichen Informationen, aber mit unterschiedlicher Qualität in Bezug auf das Signal/Rausch-Verhältnis SNR tragen, kann diese Diversität gemäß der vorliegenden Erfindung ausgenutzt und der Signalempfang optimiert werden.

Zuerst wird gemäß dem in Fig.7 dargestellten Ausführungsbeispiel ein Teil des empfangenen Strahls mit Hilfe eines Strahlteilers 15 über eine Linse 16 auf eine CCD-Kamera 17 für die Messung des *r*₀-Parameters und damit zur Bestimmung der Wellenfrontverzerrung des einfallenden Strahls gerichtet. Obwohl es mehrere Verfahren zum Schätzen des *r*₀-Parameters gibt, wird es am leichtesten ausgeführt, indem mit einer Kamera der Brennfleck des Empfangsteleskops beobachtet wird. Die mittlere Größe des Brennflecks ist umgekehrt proportional zum *r*₀-Parameter. Es kann auch das bereits vorher erwähnte DIMM-Prinzip benutzt werden. Die zum Messen des Parameters *r*₀ erforderliche Empfangsleistung ist viel niedriger als die Empfangsleistung eines Signals mit hoher Datenrate, weil die erforderliche Bandbreite der *r*₀-Messkamera viel kleiner ist.

Bei der in Fig.7 dargestellten allgemeinen Version des zur Durchführung des Verfahrens nach der vorliegenden Erfindung vorgesehenen Diversitätsempfängers werden zwei Strahlen auf die beiden Demodulatoren 12 und 14 gerichtet. Im Einzelnen wird der zweite aus dem Strahlteiler 15 austretende Strahl, d.h. der nicht der CCD-Kamera zugeführte Strahl, einem variablen Strahlteiler 18 zugeführt, von dem einer der beiden austretenden Strahlen dem DPSK-Demodulator 14 direkt und der andere der beiden austretenden Strahlen über einen Umlenkspiegel 19 dem BPSK-Demodulator 12 zugeführt wird.

Nach einer mit Hilfe der CCD-Kamera 17 durchgeführten Bestimmung des Werts des Parameters *r*₀ in Bezug auf den Teleskopdurchmesser *D* richtet dabei der variable Strahlteiler 18 T % der Strahlleistung auf den BPSK-Demodulator 12 und (100-T) % der Strahlleistung auf den DPSK-Demodulator 14. Hierbei gilt das Prinzip, je größer *r*₀ ist, um so mehr Strahlleistungsanteil wird auf den BPSK-Demodulator 12 und um so weniger Strahlungsanteil auf den DPSK-Demodulator 14 gerichtet, und umgekehrt. T ist somit im Wesentlichen proportional zu *r*₀ und umgekehrt proportional zur Verzerrung der Wellenfront des über das Empfangsteleskop einfallenden Strahls.

Das Ausgangssignal des DPSK-Demodulators 14 und das Ausgangssignal des BPSK-Demodulators 12 mit nachgeschalteter Bit-zu-Bit-Differenzschaltung 13 werden in einer Kombiniereinrichtung 20 dann entsprechend einer der herkömmlichen Diversitäts-Kombiniertechniken kombiniert, wie z.B. Selection Combining, Switched Combining, Equal Gain Combining oder Maximum Ratio Combining.

Es ist festzustellen, dass das elektrische Kombinieren, also der letzte Schritt in dem Fig.7 dargestellten Ausführungsbeispiel, auch durch Analysieren der elektrischen Ausgangssignale beider Demodulatoren 12 und 14 gesteuert werden kann. Informationen über die Signalqualität können durch Verwendung codierter Übertragungen erhalten werden, bei denen eine kleine Menge redundanter Daten hinzugefügt ist. Beispielsweise können CRC(Cyclic Redundancy Check)-Signale oder Ausgangssignale von FEC(Forward Error Correction)-Decodierern die laufende Übertragungsqualität jedes Empfängers schätzen. Diese Qualitätsschätzung (gegeben z.B. als eine Zählung von Symbolfehlern) wird dann für die Auswahl- und Kombinierentscheidung benutzt. Bei dieser alternativen Betriebsweise sollten beide Demodulatoren 12 und 14 konstant optische Leistung empfangen. In diesem Fall sind somit die Wellenfront-Verzerrungsmessung und die gesteuerte Verteilung der optischen Leistung nicht mehr notwendig.

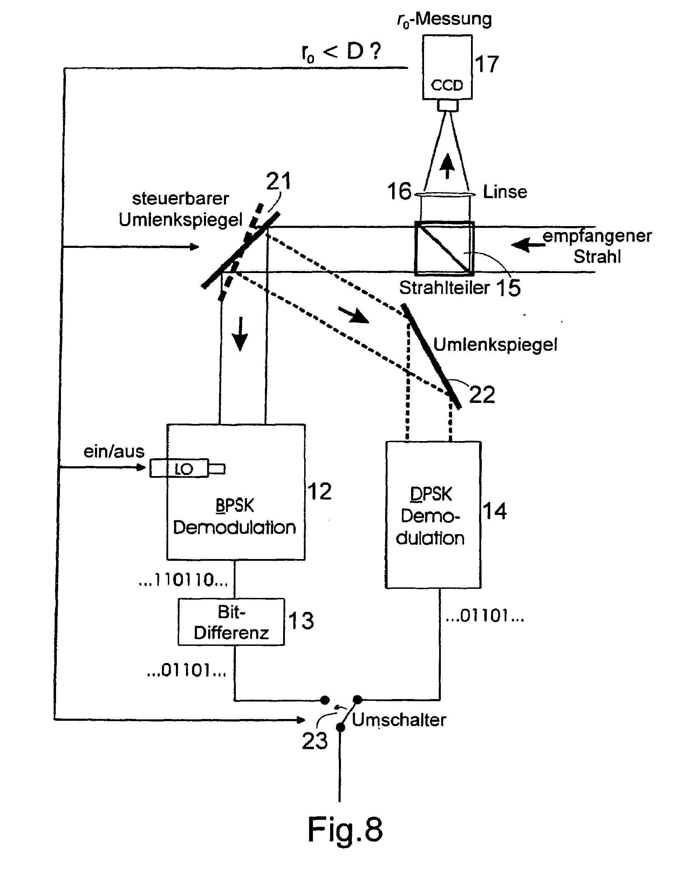

Fig.8 zeigt einen im Vergleich zu Fig.7 vereinfachten Empfänger, bei dem die Technik des "Switched Combining" ausgeführt wird. Auch hier wird zuerst ein Teil des empfangenen Strahls mit Hilfe eines Strahlteilers 15 über eine Linse 16 auf eine CCD-Kamera 17 für die Messung des *r*₀-Parameters und damit zur Bestimmung der Verzerrung der Wellenfront des einfallenden Strahls gerichtet. Nach Bestimmung des Wertes des Parameters *r*₀ in Bezug auf den Empfangsteleskopdurchmesser *D* richtet ein steuerbarer Umlenkspiegel 21 den empfangenen und durch den Strahlteiler 15 hindurch laufenden Strahl entweder auf den mit einem Lokaloszillator LO versehenen, kohärent arbeitenden BPSK-Demodulator 12, dem die elektrische Bit-zu-Bit-Differenzschaltung 13 nachgeschaltet ist, oder über einen weiteren Umlenkspiegel 22 auf den entsprechend dem Self-Homodyne-Verfahren mit Direktdetektion arbeitenden DPSK-Demodulator 14. Für die Steuerung des steuerbaren Umlenkspiegels 21 gilt dabei folgende Regel:

Wenn bei der Wellenfront-Verzerrungsmessung durch die CCD-Kamera 17 festgestellt wird, dass *r*₀<*D*, dann wird erwartet, dass das Signal/Rausch-Verhältnis SNR für den DPSK-Demodulator 14 mit Direktdetektion höher ist. Der Lokaloszillator LO des BPSK-Demodulators 12 wird abgeschaltet. Der Umlenkspiegel 21 wird so gestellt, dass der Strahl auf den DPSK-Demodulator 14 gerichtet ist.

Wenn bei der Wellenfront-Verzerrungsmessung durch die CCD-Kamera 17 dagegen festgestellt wird, dass *r*₀>*D,* dann wird erwartet, dass das Signal/Rausch-Verhältnis SNR für den BPSK-basierten Demodulator 12 höher ist. Der Lokaloszillator LO des BPSK-Demodulators 12 wird eingeschaltet. Der Umlenkspiegel 21 wird so gestellt, dass der Strahl auf den BPSK-Demodulator 12 gerichtet ist.

Ein elektrischer Umschalter 23 für das "Switched Combining" wird parallel zum steuerbaren Umlenkspiegel 21 so gesteuert, dass stets das Ausgangssignal des aktivierten und vom Umlenkspiegel 21 bestrahlten Demodulators 12 oder 14 als wirksames Ausgangssignal durchgeschaltet wird.

Sämtliche Umschaltvorgänge werden im Beispiel von Fig.8 somit durch die von der CCD-Kamera 17 vorgenommenen *r*₀-Parameter-messungen ausgelöst.

### Bezugszeichenliste

- 1: Sammelapertur
- 2: Strahlteiler
- 3: Photodetektor
- 4: Stromverstärker
- 5: Demodulator
- 6: Strahlteiler
- 7, 8: Umlenkspiegel
- 9: Verzögerungsleitung
- 10: Strahlteiler
- 11: Detektor
- 12: BPSK-Demodulator
- 13: Bit-zu-Bit-Differenzschaltung
- 14: DPSK-Demodulator
- 15: Strahlteiler
- 16: Linse
- 17: CCD-Kamera
- 18: Variabler Strahlteiler
- 19: Umlenkspiegel
- 20: Kombiniereinrichtung
- 21: Steuerbarer Umlenkspiegel
- 22: Weiterer Umlenkspiegel
- 23: Elektrischer Umschalter für "Switched Combining"
- d: Durchmesser des Photodetektors
- E₀: Ebene Welle eines Lokaloszillators
- E_{S}: Empfangssignalwelle
- G: Verstärkung
- I: Detektierter Ausgangsstrom
- LO: Lokaloszillator
- R: Widerstandslast

## Patentansprüche

1. Verfahren zur atmosphärischen optischen Freiraumübertragung von digitalen Signalen unter Verwendung von Differential-Phase-Shift-Keying (DPSK), wobei sendeseitig ein Laserstrahl mittels eines differentiell codierten Modulationssignals moduliert und empfangsseitig in einem Demodulator das interferometrische Self-Homodyne-Prinzip angewandt wird, bei dem der empfangene Laserstrahl in zwei Teilstrahlen aufgespalten wird, von denen der eine Teilstrahl um eine Bitdauer verzögert und mit dem anderen, unverzögerten Teilstrahl zu einem Überlagerungsstrahl überlagert wird, der danach einer Detektion zugeführt wird, die sich im Ergebnis im Wesentlichen wie eine inkohärent ausgeführte Direktdetektion verhält, **dadurch gekennzeichnet, dass** empfangsseitig zusätzlich in einem kohärenten, mit einem Laser-Lokaloszillator (LO) betriebenen Phasendemodulator (12) mit nachfolgender, elektrisch betriebener Bit-zu-Bit-Differenzschaltung eine zweite Detektion durchgeführt wird und dass die zwei mittels der beiden Demodulatoren (12, 14) detektierten elektrischen Signale einem signaloptimierenden Auswahl- oder Kombinierverfahren unterzogen werden.

2. Verfahren nach Anspruch 1, **dadurch gekennzeichnet, dass** Wellenfrontverzerrungen des empfangsseitig einfallenden optischen Strahls gemessen oder geschätzt werden und dass in Abhängigkeit von der gemessenen bzw. geschätzten Wellenfrontverzerrung auf den einen oder anderen der beiden Demodulatoren (12, 14) mehr optische Leistung auf Kosten des jeweils anderen Demodulators gerichtet wird, wobei die Regel gilt, dass bei stärkerer Wellenfrontverzerrung mehr optische Leistung auf den gemäß dem Self-Homodyne-Prinzip mit Direktdetektion arbeitenden Demodulator (14) und weniger optische Leistung auf den kohärenten, mit Lokaloszillator (LO) arbeitenden Demodulator (12) gerichtet wird und umgekehrt.

3. Verfahren nach Anspruch 2, **dadurch gekennzeichnet, dass** die Wellenfrontverzerrungen des einfallenden optischen Strahls anhand des sogenannten Fried-Parameters *r*₀ bestimmt werden, der auch als Kohärenzdurchmesser bezeichnet wird, wobei gilt, dass je kleiner der Parameter *r*₀ ist, desto größer die Wellenfrontverzerrungen sind.

4. Verfahren nach Anspruch 2 oder 3, **dadurch gekennzeichnet, dass** die Wellenfrontverzerrung des einfallenden Strahls mittels einer CCD-Kamera (17) bestimmt wird, der ein abgezweigter Teilstrahl des über ein Empfangsteleskop einfallenden Strahls zugeführt wird, wobei mit der CCD-Kamera der Brennfleck des Empfangsteleskops beobachtet und aus der Größe des Brennflecks auf die Wellenfront-Verzerrung des einfallenden Strahls geschlossen wird und wobei gilt, dass die mittlere Große des Brennflecks umgekehrt proportional zum *r*₀-Parameter und etwa proportional zur Verzerrung der Wellenfront ist.

5. Verfahren nach Anspruch 2 oder 3, **dadurch gekennzeichnet, dass** die Wellenfrontverzerrung bzw. der *r*₀-Parameter des einfallenden Strahls mittels des DIMM-Prinzips ermittelt wird.

6. Verfahren nach einem der vorhergehenden Ansprüche, **dadurch gekennzeichnet, dass** das Ausgangssignal des gemäß dem Self-Homodyne-Prinzip mit Direktdetektion arbeitenden Demodulators (14) und das Ausgangssignal des kohärenten, mit Lokaloszillator (LO) arbeitenden Demodulators (12) mit nachgeschalteter Bit-zu-Bit-Differenzschaltung (13) entsprechend einer der herkömmlichen Diversitäts-Kombiniertechniken kombiniert werden, wie z.B. Selection Combining, Switched Combining, Equal Gain Combining oder Maximum Ratio Combining.

7. Verfahren nach Anspruch 1, **dadurch gekennzeichnet, dass** das signaloptimierende Auswahl- oder Kombinierverfahren durch Analysieren der elektrischen Ausgangssignale der beiden Demodulatoren (12, 14) gesteuert wird, wobei aus den elektrischen Ausgangssignalen der beiden Demodulatoren Informationen über die Signalqualität durch Verwendung codierter Übertragungen erhalten werden, bei denen sendeseitig eine kleine Menge redundanter Daten hinzugefügt ist, dass CRC(Cyclic Redundancy Check)-Signale oder Ausgangssignale von FEC (Forward Error Correction)-Decodierern die laufende Übertragungsqualität im Empfänger schätzen und dass diese Qualitätsschätzung, gegeben z.B. als eine Zählung von Symbolfehlern, dann für die Auswahl- und Kombinierentscheidung benutzt wird.

8. Verfahren nach Anspruch 7, **dadurch gekennzeichnet, dass** beide Demodulatoren (12, 14) konstant optische Leistung empfangen und keine Wellenfront-Verzerrungsmessung am einfallenden optischen Strahl und keine gesteuerte Verteilung der optischen Leistung vorgenommen wird.

9. Empfänger zur Verwendung bei einem Verfahren nach einem der vorhergehenden Ansprüche, **dadurch gekennzeichnet, dass** ein gemäß dem Self-Homodyne-Prinzip mit Direktdetektion arbeitender DPSK-Demodulator (14) und ein kohärenter, mit Lokaloszillator (LO) arbeitender Demodulator (12) mit nachgeschalteter Bit-zu-Bit-Differenzschaltung (13) vorgesehen sind, denen zu gleichen oder steuerbar variablen Leistungsanteilen der über ein Empfangsteleskop empfangene Strahl zugeleitet wird, und dass die Ausgänge der beiden Demodulatoren mit einer steuerbaren elektrischen Auswahl- oder Kombiniereinrichtung (20) verbunden sind.

10. Empfänger nach Anspruch 9, **dadurch gekennzeichnet, dass** zur Bestimmung der Wellenfrontverzerrung des über das Empfangsteleskop empfangenen Strahls eine durch eine CCD-Kamera (17) realisierbare Messvorrichtung oder eine Schätzvorrichtung vorgesehen ist, die von der jeweiligen Wellenfrontverzerrung abhängige Steuersignale erzeugt.

11. Empfänger nach Anspruch 9 oder 10, **dadurch gekennzeichnet, dass** im Anschluss an das Empfangsteleskop ein optischer Strahlteiler (15) vorgesehen ist, der einen kleinen Anteil des empfangenen Strahls an die Mess- bzw. Schätzvorrichtung (17) und den anderen Anteil an die beiden Demodulatoren (12, 14) unter geeigneter Leistungsaufteilung weitergibt.

12. Empfänger nach Anspruch 11, **dadurch gekennzeichnet, dass** im Wege des Strahls zwischen dem optischen Strahlteiler (17) und den beiden Demodulatoren (12, 14) ein von der Mess- bzw. Schätzvorrichtung steuerbarer, hinsichtlich Leistungsaufteilung variabler Strahlteiler (18) oder ein von der Mess- bzw. Schätzvorrichtung steuerbarer, in zwei Stellungen schwenkbarer Umlenkspiegel (21) vorgesehen ist, der zur Strahlweiterleitung auf einen der beiden Demodulatoren ausrichtbar ist.

13. Empfänger nach Anspruch 12, **dadurch gekennzeichnet, dass** der variable Strahlteiler (17) hinsichtlich der Aufteilung der Strahlungsleistung auf seine zwei Strahlausgangszweige, die jeweils zu einem der beiden Demodulatoren (12, 14) führen, variabel ist.

14. Empfänger nach Anspruch 12, **dadurch gekennzeichnet, dass** die elektrischen Signalausgänge der beiden Demodulatoren (12, 14) mit den beiden Eingängen eines steuerbaren elektrischen Umschalters (23) verbunden sind, der zur Durchführung des "Switched-Combining"-Diversitätsverfahrens dient und von der Mess- bzw. Schätzvorrichtung (17) gemeinsam mit dem steuerbaren, in zwei Stellungen schwenkbaren Umlenkspiegel (21) gesteuert ist, und dass der Ausgang des steuerbaren elektrischen Umschalters der Signalausgang des Empfängers ist.

15. Empfänger nach Anspruch 14, **dadurch gekennzeichnet, dass** der Lokaloszillator (LO) des kohärent arbeitenden Demodulators (12) gemeinsam mit dem elektrischen steuerbaren Umschalter (23) und dem steuerbaren, in zwei Stellungen schwenkbaren Umlenkspiegel (21) von der Mess- bzw. Schätzvorrichtung (17) ein- und abschaltbar ist.

## Claims

1. Method for atmospheric optical free space transmission of digital signals using Differential Phase Shift Keying (DPSK), wherein, on the transmitter side, a laser beam is modulated with a differentially encoded modulation signal and, on the receiver side, the interferometric self-homodyne principle is employed in a demodulator, according to which the received laser beam is split into two partial beams, wherein one of the sub-beams is delayed by one bit duration and is superposed with the other non-delayed partial beam to form a superposition beam which is then forwarded for a detection that in effect substantially operates like an incoherently performed direct detection, **characterized in that**, on the receiver side, a second detection is performed in addition, using a coherent phase demodulator (12) operating with a laser local oscillator (LO), said demodulator comprising a subsequent electrically operated differential bit-to-bit circuit, and that the two electric signals detected by means of the two demodulators (12, 14) are subjected to a signal-optimizing selection or combination process.

2. Method of claim 1, **characterized in that** wave front distortions of the optical beam impinging on the receiver side are measured or estimated and that in dependence on the measured or estimated wave front distortion, more optical power is directed to the one or the other of the two demodulators (12, 14) at the expense of the respective other demodulator, wherein: the greater the wave front distortion, the more optical power is directed to the demodulator (14) operating with direct detection according to the self-homodyne principle and the less optical power is directed to the coherent demodulator (12) operating with a laser local oscillator (LO), and vice versa.

3. Method of claim 2, **characterized in that** the wave front distortions of the impinging optical beam are determined by the so-called Fried parameter r₀ which is also referred to as coherence diameter, wherein: the smaller the parameter r_{0,} the greater the wave front distortions.

4. Method of clam 2 or 3, **characterized in that** the wave front distortion of the impinging beam is determined by means of a CCD camera (17) which is supplied with a branched-off partial beam of the beam impinging through a receiving telescope, wherein the CCD camera is used to observe the focal spot of the receiving telescope and the wave front distortion of the impinging beam is concluded from the size of the focal spot, and where it is true that the mean size of the focal spot is inversely proportional to the r₀ parameter and approximately proportional to the distortion of the wave front.

5. Method of claim 2 or 3, **characterized in that** the wave front distortion or the r₀ parameter of the impinging beam is determined using the DIMM principle.

6. Method of one of the preceding claims, **characterized in that** the output signal of the demodulator (14) operating with direct detection according to the self-homodyne principle and the output signal of the coherent demodulator (12) operating with a local oscillator (LO), having a downstream bit-to-bit differential circuit (13), are combined in accordance with one of the conventional diversity combining techniques, such as Selection Combining, Switched Combining, Equal Gain Combining, or Maximum Ratio Combining.

7. Method of claim 1, **characterized in that** the signal-optimizing selection or combination method is controlled by analyzing the electrical output signals of the two demodulators (12, 14), wherein information about the signal quality is obtained from the electrical output signals of the two demodulators by using encoded transmissions to which a small quantity of redundant data is added on the transmitter side, that CRC (Cyclic Redundancy Check) signals or output signals of FEC (Forward Error Correction) decoders estimate the current transmission quality in the receiver, and that this quality estimate, e.g. in the form of a symbol error count, is then used in the selection and combination decision.

8. Method of claim 7, **characterized in that** both demodulators (12, 14) constantly receive optical power and no wave front distortion measuring is performed on the impinging optical beam and no controlled distribution of the optical power is made.

9. Receiver for use with a method of one of the preceding claims, **characterized in that** an incoherent DPSK demodulator (14) operating with direct detection according to the self-homodyne principle and a coherent demodulator (12) operating with a local oscillator (LO), having a downstream bit-to-bit differential circuit (13), are provided to which is fed, in equal or controllably variable power proportions, the beam received through a receiving telescope, and that the outputs of both demodulators are connected with a controllable electrical selection and combination means (20).

10. Receiver of claim 9, **characterized in that** a measuring device, which could be realized by a CCD camera (17), or an estimating device is provided for determining the wave front distortion of the beam received via the receiving telescope, which device generates control signals depending on the respective wave front distortion.

11. Receiver of one of claims 9 or 10, **characterized in that** an optical beam splitter (15) is provided downstream of the receiving telescope, which beam splitter supplies a small part of the received beam to the measuring or estimating device (17) and passes the other part on to the two demodulators (12, 14) with the power being split adequately.

12. Receiver of claim 11, **characterized in that**, along the beam path between the optical beam splitter (17) and the two demodulators (12, 14), a beam splitter (18), which is controllable by the measuring or estimating device and variable with respect to the distribution of the power, or a passive reflector (21) is provided, which passive reflector is controllable by the measuring or estimating device and pivotable to two positions, said reflector being orientatable for directing the beam to one of the two demodulators.

13. Receiver of claim 12, **characterized in that** the variable beam splitter (17) is variable with respect to the distribution of the radiated power between its two beam output branches that respectively lead to one of the two demodulators (12, 14).

14. Receiver of claim 12, **characterized in that** the electrical signal outputs of the two demodulators (12, 14) are connected to the two inputs of a controllable electrical changeover switch (23) serving to carry out the Switched-Combining Diversity Process and being controlled by the measuring or estimating device (17) together with said passive reflector (21) pivotable to two positions, and that the output of the controllable electrical changeover switch is the signal output of the receiver.

15. Receiver of claim 14, **characterized in that**, together with the electrically controllable changeover switch (23) and the controllable passive reflector (21) pivotable to two positions, the local oscillator (LO) of the coherently operating demodulator (12) is adapted to be switched on and off by the measuring or estimating device (17).

## Revendications

1. Procédé destiné à la transmission d'espace vide optique atmosphérique de signaux numériques utilisant la modulation par déplacement de phase différentielle (DPSK), dans lequel un faisceau laser est modulé, côté transmetteur, avec un signal de modulation codé différentiellement, et, côté récepteur, le principe auto-homodyne interférométrique est appliqué dans un démodulateur, ledit faisceau laser reçu étant divisé en deux faisceaux partiels, dont l'un des faisceaux partiels est décalé par le temps d'un bit et superposé sur l'autre faisceau partiel non-décalé, pour former un faisceau de superposition qui est après fourni à une détection qui, en effet, agit sensiblement comme une détection directe incohérente, **caractérisé en ce que**, côté récepteur, une deuxième détection est faite en addition dans un démodulateur de phase (12) cohérent, actionné par un oscillateur local à laser (LO) et comprenant un circuit différentiel bit à bit électrique prévu en aval, et que les deux signaux électriques détectés par les deux démodulateurs (12, 14) sont soumis à un processus de sélection ou de combinaison optimisant les signaux.

2. Procédé selon la revendication 1, **caractérisé en ce que** des distorsions du front d'onde du faisceau optique incident au côté récepteur sont mesurées ou estimées, et qu'en fonction de la distorsion du front d'onde mesurée ou estimée, plus de puissance optique est dirigée vers l'un ou l'autre des deux démodulateurs (12, 14) au dépens de l'autre démodulateur respectif, où il est vrai que: plus grande est la distorsion du front d'onde, plus grande est la puissance optique dirigée au démodulateur (14) à détection directe selon le principe auto-homodyne, et moins grande est la puissance optique dirigée au démodulateur (12) cohérant à oscillateur local (LO), et vice versa.

3. Procédé selon la revendication 2, **caractérisé en ce que** les distorsions du front d'onde du faisceau optique incident sont déterminées à l'aide d'un paramètre appelé paramètre de Fried r₀, aussi appelé diamètre de cohérence, où: plus petit est le paramètre r_{β}, plus grandes sont les distorsions du front d'onde.

4. Procédé selon la revendication 2 ou 3, **caractérisé en ce que** la distorsion du front d'onde du faisceau incident est déterminée à l'aide d'une caméra CCD (17) à laquelle est fourni un faisceau partiel branché dudit faisceau incident à travers un télescope récepteur, le point focal du télescope récepteur étant observé à l'aide de ladite caméra CCD, et la distorsion du front d'onde du faisceau incident étant conclue de la taille du point focal, et où il est vrai que la taille moyenne dudit point focal est inversement proportionnelle au paramètre r_{β} et approximativement proportionnelle à la distorsion du front d'onde.

5. Procédé selon la revendication 2 ou 3, **caractérisé en ce que** la distorsion du front d'onde ou le paramètre r₀ dudit rayon incident est déterminé selon le principe DIMM.

6. Procédé selon l'une quelconque des revendications précédentes, **caractérisé en ce que** le signal de sortie du démodulateur (14) à détection directe selon le principe auto-homodyne et le signal de sortie du démodulateur cohérent (12) à oscillateur local (LO) avec circuit différentiel bit à bit (13) successif sont combinés selon une des méthodes conventionnelles, pour exemple Selection Combining, Switched Combining, Equal Gain Combining ou Maximum Ratio Combining.

7. Procédé selon la revendication 1, **caractérisé en ce que** le procédé de sélection ou de combinaison optimisant les signaux est commandé par l'analyse des signaux de sortie des deux démodulateurs (12, 14), des informations sur la qualité des signaux étant obtenus des signaux de sortie électriques des deux démodulateurs à l'aide de transmissions codées, dans lesquelles des petites quantités de données de redondance sont introduites au côté transmetteur, que des signaux CRC (Cyclic Redundancy Check) ou des signaux de sortie de décodeurs FEC (Forward Error Correction) estiment la qualité de transmission actuelle dans le récepteur, et que cette estimé de qualité, pour exemple sous forme d'un compte des erreurs des symboles, est utilisée dans la décision de sélection et combinaison.

8. Procédé selon la revendication 7, **caractérisé en ce que** les deux démodulateurs (12, 14) constamment reçoivent de la puissance optique et qu'une mesure de la distorsion du front d'onde n'est pas effectuée au faisceau incident et qu'une distribution commandée de la puissance optique n'est pas effectuée.

9. Récepteur pour l'utilisation dans un procédé selon l'une quelconque des revendications précédentes, **caractérisé en ce que** l'on prévoit un démodulateur DPSK (14) à détection directe selon le principe auto-homodyne et un démodulateur cohérent (12) à oscillateur local (LO) avec circuit différentiel bit à bit (13) successif, auxquels est fourni, en quoteparts de la puissance égaux ou variables par commande, le faisceau reçu à l'aide d'un télescope récepteur, et que les sorties des deux démodulateurs sont connectées à un moyen de sélection ou combinaison (20) électrique commandable.

10. Récepteur selon la revendication 9, **caractérisé en ce que** l'on prévoit un dispositif de mesure ou un dispositif d'estimation, réalisable sous forme d'une caméra CCD (17), pour déterminer la distorsion du front d'onde dudit faisceau reçu à l'aide dudit télescope récepteur, ledit dispositif générant des signaux de commande dépendent de la distorsion du front d'onde respective.

11. Récepteur selon l'une quelconque des revendications 9 ou 10, **caractérisé en ce qu'**une lame séparatrice (15) optique est prévue en aval du télescope récepteur, ladite lame séparatrice passant un petit part du faisceau reçu au dispositif de mesure ou d'estimation (17) et fournit l'autre part aux deux démodulateurs (12, 14) avec une distribution de puissance adéquate.

12. Récepteur selon la revendication 11, **caractérisé en ce que** dans le chemin du faisceau entre ladite lame séparatrice optique (17) et les deux démodulateurs (12, 14), l'on prévoit une lame séparatrice (18) qui est apte à être commandée par le dispositif de mesure ou d'estimation et variable en regard de la distribution de la puissance ou un miroir de renvoi (21) apte à être commandé par le dispositif de mesure ou d'estimation et pivotable dans deux positions, ledit miroir étant apte à être orienté vers un des deux démodulateurs pour passer le faisceau.

13. Récepteur selon la revendication 12, **caractérisé en ce que** ladite lame séparatrice (17) variable est variable en regard de la distribution de la puissance radiante sur ses deux branches de sortie du faisceau, chacune menant à un des deux démodulateurs (12, 14).

14. Récepteur selon la revendication 12, **caractérisé en ce que** les sorties de signaux électriques des deux démodulateurs (12, 14) sont connectées aux deux entrées d'un inverseur électrique commandable (23) qui sert à la mise en oeuvre du processus de diversité du type "switched combining" et qui est commandé par le dispositif de mesurage ou d'estimation (17) conjointement avec ledit miroir de renvoi (21) commandable et pivotable dans deux positions, et que la sortie du inverseur électrique commandable est la sortie de signal dudit récepteur.

15. Récepteur selon la revendication 14, **caractérisé en ce que** ledit oscillateur local (LO) du démodulateur (12) cohérent est apte à être activé et désactivé, conjointement avec ledit inverseur électrique commandable (23) et ledit miroir de renvoi (21) commandable et pivotable dans deux positions, par le dispositif de mesurage ou d'estimation (17).
